# EUROPEAN PATENT SPECIFICATION

(11) **EP 1 756 630 B1**
(45) Date of publication and mention of the grant of the patent: **22.07.2009**
(21) Application number: 05742805.4
(22) Date of filing: 27.05.2005
(51) Int. Cl.: G02B 3/14, G02B 26/02

(54) **OPTICAL ELEMENT USING A MAGNETIC FLUID**
OPTISCHES ELEMENT MIT EINER MAGNETISCHEN FLÜSSIGKEIT
ELEMENT OPTIQUE EMPLOYANT UN FLUIDE MAGNETIQUE

(30) Priority: 01.06.2004 EP 04102437; 25.10.2004 GB 0423564
(43) Date of publication of application: 28.02.2007
(73) Proprietor: Koninklijke Philips Electronics N.V., 5621 BA Eindhoven (NL)
(72) Inventor: HENDRIKS, B. H. W., c/o Philips IP & Standards, Redhill Surrey RH1 5HA (GB); VAN SANTEN, Helmar, c/o Philips IP & Standards, Redhill Surrey RH1 5HA (GB); VAN DER AA, Michiel., c/o Philips IP & Standards, Redhill Surrey RH1 5HA (GB); OPHEY, Wil, c/o Philips IP & Standards Sta, Redhill Surrey RH1 5HA (GB); TUKKER, Teus, c/o Philips IP & Standards, Redhill Surrey RH1 5HA (GB); KUIPER, Stein, c/o Philips IP & Standardsy, Redhill Surrey RH1 5HA (GB)
(74) Representative: Uittenbogaard, Frank
(86) International application number: PCT/IB2005/051739
(87) International publication number: WO 2005/119307

(56) References cited:
- WO-A-00/58763
- US-A- 3 876 288
- US-A- 5 091 801
- US-A- 5 733 458

## Description

This invention relates to an optical element. Optical elements such as lenses, shutters and diaphragms are used in optical devices such as cameras.

The advent of cameras in mobile multimedia devices, such as the third generation mobile telephones, has increased the emphasis on providing optical elements that are lightweight and compact, while still providing good optical properties. To this end, so called fluid focus lenses have been developed.

For example, United States Patent US 69449081 discloses an optical element and an optical device that uses the element. The optical element has a first fluid and an electroconductive or polar, second fluid, immiscible with each other, which are confined in a sealed space created between a first support and a second support. The first fluid and the second fluid have respective light transmittances different from each other. By varying a voltage applied to the second fluid, the shape of an interface between the first fluid and the second fluid is altered, so as to change an amount of light passing through the optical element.

This type of lens is known as an electrowetting lens, which has relatively low power consumption in normal operation, and a quick response to a varying voltage. However, the electrowetting lens requires a large switching voltage to alter the relationship between the two fluids, which limits the obtainable change in the radius of the meniscus between the two fluids.

Japanese Patent Application Publication 62-105125 discloses a diaphragm with a magnetic fluid and a transparent liquid inserted and held, closed up tightly by a transparent container. A separator is provided on the centre part, and the separator and the transparent container consist of a material having the same quality or an equal optical characteristic, or the same component body. An annular magnet, which has been magnetized in the axial direction, is made adjacent coaxially to the container, and an annular coil is placed coaxially in the outside peripheral part of the container. When the coil is not conducting electrically, the magnetic fluid is fixed annularly to the lower end of the outside peripheral part by the magnetic field of the magnet, and when a DC current is made to flow to the coil, a magnetic field is generated in the axial direction, and the magnetic fluid which has been fixed annularly is deformed, extended toward the axial centre, and has a diaphragm effect.

The diaphragm of this patent application has a number of weaknesses, principally, that its design is overly complicated and the resulting device is limited in its fields of applications. It has a fixed magnet and a coil for creating an opposite magnetic field, and is provided with a central separator inside the fluid chamber, all of which results in a device that is difficult and expensive to manufacture. The device itself operates solely as a diaphragm, and cannot act as either a lens or shutter.

It is an object of the invention to improve upon the known art.

According to a first aspect of the present invention, there is provided an optical element comprising a fluid chamber, the fluid chamber having side portions and end portions, and containing a first fluid and a second fluid, the fluids being non-miscible and the second fluid capable of being influenced by a magnetic field, and a device for providing a magnetic field over at least a portion of the fluid chamber, the end portions of the fluid chamber being connected together only by the side portions characterised in that an end portion of the fluid chamber is repellent of the first fluid or an end portion of the fluid chamber is provided with a coating that is repellent of the first fluid.

Owing to the invention it is possible to provide an optical element that can provide a variety of optical functions, is relatively simple and inexpensive to manufacture, and in operation does not require the large voltages of an electrowetting fluid focus lens. Since the end portions of the fluid chamber are connected together only by the side portions, there is no interruption in the optical path across the width of the fluid chamber.

Preferably, the end portions of the fluid chamber are substantially flat. This is simplest arrangement for the fluid chamber, being easiest to manufacture, and ensuring that there is a minimum of interruption in the optical path through the fluid chamber.

In one advantageous embodiment, the second fluid is in contact with a first end portion of the fluid chamber, and the magnetic field is capable of moving the second fluid so that the first fluid contacts the first end portion. This supports the use of the optical element as a diaphragm.

Advantageously, an end portion of the fluid chamber is repellent of the first fluid, or an end portion of the fluid chamber is provided with a coating that is repellent of the first fluid. By repelling the first fluid, the structure of the exit window assists the return of the fluids to their original positions, when no magnetic field is present.

Preferably the second fluid is a ferrofluid. A ferrofluid is a fluid that, when exposed to a magnetic field, has the tendency to move to the locus with the highest magnetic field density, and as such is ideally suited for use in the optical element.

Ideally, the side portions of the fluid chamber comprise a substantially cylindrical wall. This forms the simplest embodiment of the fluid chamber, and is easy to manufacture and simplest to use in any device that uses optical elements.

Advantageously, the device for providing a magnetic field over at least a portion of the fluid chamber comprises a voltage source for generating a gradient magnetic field, and the voltage source comprises one or more coils around the fluid chamber. As above, this is the simplest embodiment of the source of magnetic field.

Preferably, the first fluid is transparent and the second fluid is not transparent, or the first fluid is transparent and the second fluid is partially transparent. These two separate embodiments result in different types of optical element, depending upon the application in which the optical element is to be employed.

Embodiments of the present invention will now be described, by way of example only, with reference to the accompanying drawings, in which:-
Figure 1 is a schematic diagram of an optical element, in three different positions of operation,
Figure 2 is a schematic diagram of a second embodiment of the optical element, in three different positions of operation,
Figure 3 is a schematic diagram of a third embodiment of the optical element, in two different positions of operation, and
Figure 4 is a schematic diagram of an image capture device incorporating an embodiment of the optical element.

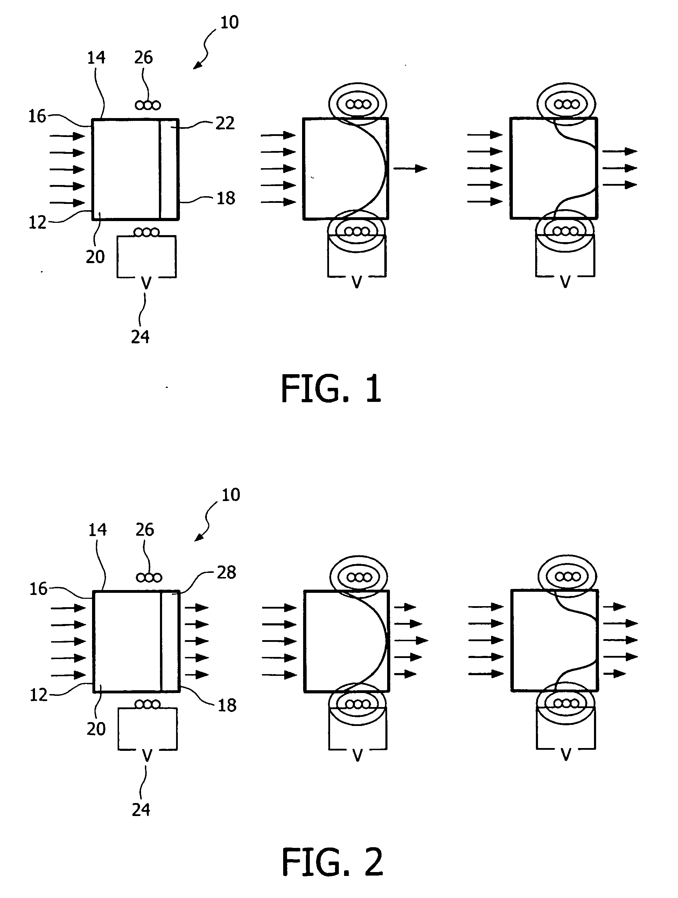

In Figure 1, an optical element 10 comprises a fluid chamber 12, the fluid chamber 12 having side portions 14 and end portions 16 and 18. The end portions 16 and 18 act as an entrance window 16 (for light) and an exit window 18. The side portions 14 of the fluid chamber 12 comprise a substantially cylindrical wall 14. The end portions 16 and 18 of the fluid chamber 12 are connected together only by the side portions 14. The end portions 16 and 18 are substantially flat.

The fluid chamber contains a first fluid 20 and a second fluid 22, the fluids 20 and 22 being non-miscible. The second fluid 22 is in contact with a first end portion 18 (the exit window 18) and is capable of being influenced by a magnetic field. The optical element 10 also includes a device 24 for providing a magnetic field over at least a portion of the fluid chamber 12, this device 24 being a voltage source 24 for generating a gradient magnetic field. In the embodiment of Figure 1, the voltage source 24 comprises a coil 26 around the fluid chamber 12.

The embodiment of Figure 1 is shown in three different stages of its operation. The left hand of the three views of the optical element 10 shows the element 10, in its normal position, with no magnetic field present. The first fluid 20 is transparent and the second fluid 22 is not transparent. Any light entering the fluid chamber 12 via the entrance window 16 does not pass through the chamber 12, as it is prevented from doing so by the non-transparent second fluid 22, which is a ferrofluid. The optical element 10, when in this position is acting as a shutter, preventing light reaching the photographic film, or more likely the light-detecting surface, in a digital camera.

In the second, middle view of the optical element 10, the voltage source 24, via the coil 26, is creating a magnetic field over the portion of the fluid chamber 12 that includes the ferrofluid 22. The ferrofluid 22 is affected by the magnetic field that is created and moves into a position similar to that shown in the middle view of the optical element 10. As the ferrofluid 22 is pulled towards the side portions 14 of the fluid chamber 12, the magnetic field is capable of moving the ferrofluid 22 into a position such that the first fluid 20 comes into contact with the exit window 18. Since the first fluid 20 is transparent, a small amount of light will pass through the fluid chamber 12, and pass out through the exit window 18. This is illustrated by the presence of the arrow in the Figure on the exit side of the optical element 10, in the middle view of the optical element.

As the magnetic field is increased in magnitude, by the voltage increasing from the voltage source 24, the ferrofluid 22 will be pulled more and more towards the sides of the fluid chamber 12. This will result in the position of the fluids 20 and 22 altering to take up those positions shown in the right hand view of the fluid chamber 12 shown in Figure 1. As can be seen from this view, an increased amount of the first fluid 20 has come into contact with the exit window 18 of the fluid chamber 12.

Since the first fluid 20 is transparent, while the second fluid 22, the ferrofluid, is not transparent, as more of the first fluid 20 comes into contact with the exit window 18 of the fluid chamber 12 more light will pass through the fluid chamber 12 and out of the exit window 18. This is illustrated in the right hand of the three views of Figure 1 by the three arrows indicating the amount of light that is exiting the fluid chamber 12.

The voltage source 24 is capable of producing a smooth change in voltage over its range, thereby allowing the coils to produce magnetic fields of various magnitudes, and thereby allowing fine control over the positions of the two fluids 20 and 22, in the chamber 12.

Once the voltage source 24 is returned to zero, the coils 26 surrounding the fluid chamber 13 will no longer provide a magnetic field across the chamber 12. When this occurs, the two fluids 20 and 22 will return to their starting positions, returning to an arrangement as shown in the left hand view in Figure 1 of the optical element 10. The second fluid 22 will once again prevent light from passing through the fluid chamber 12. The embodiment of the optical element 10 in Figure 1 is of the optical element 10 acting as a shutter or diaphragm. Under the control of the magnetic field produced by the coils 26, under the control of the voltage source 24, the two fluids are manipulated to allow a small amount of light through the chamber 12 for a short period of time.

To assist the returning of the fluids 20 and 22 to their starting positions and to ensure that the two fluids remain in two separate single masses (i.e. to prevent any part of the first fluid 20 remaining on the exit window 18 side of the fluid chamber 12 when the magnetic field is removed), the substantially flat exit window 18 of the fluid chamber 12 is repellent of the first fluid 20.

An alternative solution is that the substantially flat exit window 18 of the fluid chamber 12 is provided with a coating that is repellent of the first fluid 20. In either case, the exit window 18 repels the fluid 20, which is significant at the time that the magnetic field is removed from acting upon the fluid chamber 12. At this point, the fact that the exit window is made or coated with a material that repels the first fluid 20, ensures that this fluid is returned to a position as shown in the left view of Figure 1.

A second embodiment of the optical element 10 is shown in Figure 2, with three views of the optical element 10 illustrated in a similar manner as that used in Figure 1. The physical structure of the optical element 10 is identical to that of the first embodiment, with that the first fluid 20 being transparent, but the second fluid (referenced 28 in the second embodiment of Figure 2) is partially transparent, unlike the embodiment of Figure 1, where the second fluid 22 is wholly non-transparent.

As in the embodiments above, the optical element 10 has a fluid chamber 12, and a voltage source 24 including coils 26 for providing a magnetic field over the fluid chamber 12. In the left hand view of the optical element 10 in Figure 2, with no voltage being provided by the voltage source 24 and correspondingly no magnetic field being present, a small amount of light is able to pass through the chamber 12. This amount of light is less than the amount of light entering the chamber on the entrance side, as the partially transparent second fluid 28 will absorb some of the light entering the chamber 12. On the exit side of the optical element 10, in the left hand view of Figure 2, the arrows indicate the light that has passed through the chamber 12.

When the voltage source 24 is turned on, so that the coils 26 generate a magnetic field over the chamber 12, the second fluid 28 is attracted towards the magnetic field and takes up a position as shown in the middle view of the three views in Figure 2. The optical characteristics of the element 10 are altered and the amount of light that passes through the chamber 12 of the element 10 is altered. Since the second fluid 28 is partially transparent, the amount of light that exits the chamber 12, at any particular point, depends upon the height of the column of second fluid 28 through which the light has passed.

The second embodiment of the optical element 10, which is shown in Figure 2, acts primarily as a variable beam intensity shaping element, in varying the amount of light that passes through the element according to the strength of the magnetic field generated by the coils 26 of the voltage source 24. In the middle view of the three views of Figure 2, the sizes of the arrows on the exit side of the fluid chamber 12 give an approximation to the relative intensities of the light passing out through the exit window 18 of the chamber 12.

As the magnitude of the magnetic field is increased, by increasing the voltage flowing through the coils 26, the second fluid 28 is further affected by the magnetic field and moves into a position similar to that shown in the right hand view in Figure 2. The optical characteristics of the element 10 are further modified, and the profile of the light intensity across the cross-section of the optical element 10 is, likewise, further altered.

As before, for the first embodiment shown in Figure 1, when the voltage source 24 is controlled so that there is no voltage through the coil 26, the magnetic field is no longer present, and the fluids 20 and 28 inside the fluid chamber 12 will return to the arrangement shown in the first view of Figure 2. Once again, the surface of the chamber 12 may be hydrophilic, thereby repelling the first fluid 20, to assist the return of the two fluids 20 and 28 to their respective original positions.

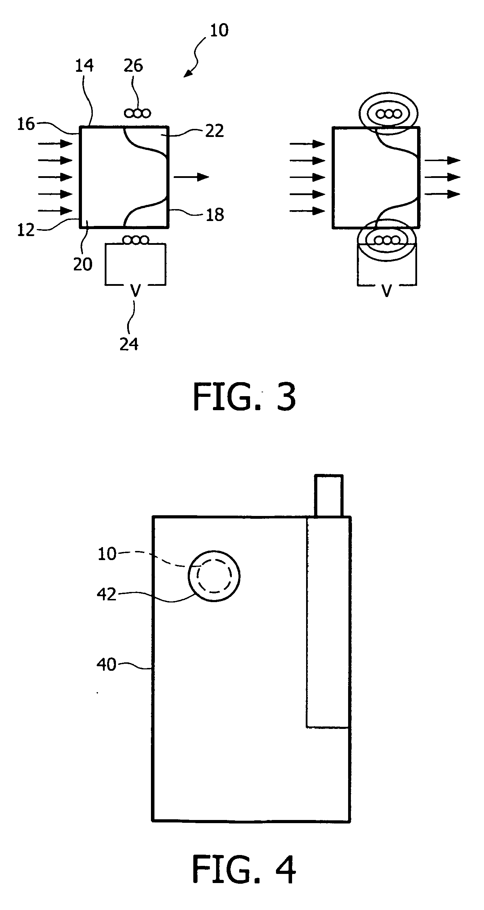

A third embodiment of the optical element 10 is shown in two views in Figure 3. The overall structure of the optical element 10 is as in the two previous embodiments, with a fluid chamber 12 containing two immiscible fluids 20 and 22, with entrance and exit windows defined on the chamber 12. The fluid 20 is transparent, and the fluid 22 is not transparent, as in the first embodiment of the optical element 10. A voltage source 24 for generating a gradient magnetic field, which includes coils 26 around the fluid chamber 12 is also provided.

However in this embodiment, when the magnetic field is not present, the starting position of the two fluids 20 and 22 is as shown in the left hand view of Figure 3. Unlike the previous two embodiments, the interface of the two fluids is not a flat circle (in a cylindrical fluid chamber), but effectively forms a curved meniscus. To achieve this, the exit window 18 is provided with a disc-shaped coating that attracts the fluid 20. Alternatively, the exit window 18 may attract the fluid 20, but is coated with a ring-shaped repelling coating. For example, the fluid 20 may be water based; the fluid 22 may be oil, with the exit window 18 composed of glass coated with a ring-shaped layer of fluorosilane.

As in the previous embodiment, the optical element 10 of Figure 3 acts as a diaphragm. The optical element 10 varies the amount of light that it lets through according to the strength of the magnetic field across the fluid chamber 12. As the voltage increases from the voltage source 24, the magnitude of the magnetic field increases and the second fluid 22 is drawn towards the side of the fluid chamber 12. This increases the amount of the first fluid 20 that is in contact with the exit window of the chamber, and therefore more light is allowed through. The arrows on the exit side are used to illustrate the change in the amount of light that passes through the chamber 12.

The exit window 18 of the chamber 12 may be patterned in rings using a geometrical structure or a combination of ring shaped coatings modifying the contact angle to pinpoint the shutter or diaphragm in preferred positions. This solution is applicable to all three embodiments.

In Figure 1 the side walls 14 of the chamber 12 should be a material with low hysteresis, such as an amorphous fluoropolymer, such that the contact line between both liquids can easily slide along the wall without sticking. The ferrofluid 22 can consist of nanoparticles of encapsulated (ferro) magnetic particles in a carrier fluid and a dispersant. The ferrofluid 22 may be water-based or oil based. In the case of a water-based ferrofluid, the other fluid 20 would be, for example, a slicone oil or an alkane. In that case the exit wall 18 should be hydrophobic, for instance by a coating made of an amorphous fluoropolymer. In case of an oil-based ferrofluid 22 the other fluid 20 would be, for example, water or ethylene glycol. The exit window 18 should then be hydrophilic, for instance when it is composed of glass.

An optical element made according to any of the three embodiments is suitable for use in an image capture device such as a camera, such as the one shown in Figure 4. In this Figure, the back of a mobile telephone 40 is shown, with a camera 42. The camera 42 includes the optical element 10, which here is operating as a shutter, as in the embodiment that is described with reference to Figure 1. The optical element 10 has no mechanical moving parts and requires only a relatively low voltage for a short period of time to operate. This leads to a highly effective and efficient shutter, that is suitable for use in situations where power consumption is of great importance. This is particularly the case in device such as mobile telephones that require substantial energy to power the display device and the wireless communication module of the mobile telephone.

An optical element made according to any of the three embodiments is suitable for use in any optical recording device such as in a CD/DVD compatible optical recording pick up unit to change the numerical aperture of the optical beam when reading out different disc formats such as a CD or DVD disc.

## Claims

1. An optical element comprising a fluid chamber (12), the fluid chamber (12) having side portions (14) and end portions (16, 18), and containing a first fluid (20) and a second fluid (22), the fluids (20, 22) being non-miscible and the second fluid (22) capable of being influenced by a magnetic field, and a device (24) for providing a magnetic field over at least a portion of the fluid chamber (12), the end portions (16, 18) of the fluid chamber (12) being connected together only by the side portions (14) **characterised in that** an end portion (18) of the fluid chamber (12) is repellent of the first fluid (20) or an end portion (18) of the fluid chamber (12) is provided with a coating that is repellent of the first fluid (20).

2. An optical element according to claim 1, wherein the end portions (16, 18) of the fluid chamber (12) are substantially flat.

3. An optical element according to claim 1 or 2, wherein the second fluid (22) is in contact with a first end portion (18) of the fluid chamber (12), and the magnetic field is capable of moving the second fluid (22) so that the first fluid (20) contacts the first end portion (18).

4. An optical element according to any preceding claim, wherein the second fluid (22) is a ferrofluid (22).

5. An optical element according to any preceding claim, wherein the side portions (14) of the fluid chamber (12) comprise a substantially cylindrical wall (14).

6. An optical element according to any preceding claim, wherein the device (24) for providing a magnetic field over at least a portion of the fluid chamber comprises a voltage source (24) for generating a gradient magnetic field.

7. An optical element according to claim 6, wherein the voltage source (24) comprises one or more coils (26) around the fluid chamber (12).

8. An optical element according to any preceding claim, wherein the first fluid (20) is transparent and the second fluid (22) is not transparent.

9. An optical element according to any one of claims 1 to 7, wherein the first fluid (20) is transparent and the second fluid (22) is partially transparent.

10. An image capture device incorporating an optical element according to any one of claims 1 to 9.

11. An optical recording device incorporating an optical element according to any one of claims 1 to 9.

## Patentansprüche

1. Optisches Element mit einer Flüssigkeitskammer (12), wobei die genannte Flüssigkeitskammer (12) Seitenteile (14) und Endteile (16, 18) aufweist, und eine erste Flüssigkeit (20) sowie eine zweite Flüssigkeit (22) enthält, wobei die Flüssigkeiten (20, 22) nicht mischbar sind und wobei die zweite Flüssigkeit (22) imstande ist, von einem Magnetfeld beeinflusst zu werden, und mit einer Anordnung (24) zum Liefern eines Magnetfeldes über wenigstens einen Teil der Flüssigkeitskammer (12), wobei die Endteile (16, 18) der Flüssigkeitskammer (12) nur mit Hilfe der Seitenteile (14) miteinander verbunden sind, **dadurch gekennzeichnet, dass** ein Endteil (18) der Flüssigkeitskammer (12) die erste Flüssigkeit (20) abstößt oder ein Endteil (18) der Flüssigkeitskammer (12) mit einer Deckschicht versehen ist, welche die erste Flüssigkeit (20) abstößt.

2. Optisches Element nach Anspruch 1, wobei die Endteile (16, 18) der Flüssigkeitskammer (12) im Wesentlichen flach sind.

3. Optisches Element nach Anspruch 1 oder 2, wobei die zweite Flüssigkeit (22) mit einem ersten Endteil (18) der Flüssigkeitskammer (12) in Berührung ist, und das Magnetfeld imstande ist, die zweite Flüssigkeit (22) derart zu verlagern, dass die erste Flüssigkeit (20) den ersten Endteil (18) berührt.

4. Optisches Element nach einem der vorstehenden Ansprüche, wobei die zweite Flüssigkeit (22) ein Ferrofluid (22) ist.

5. Optisches Element nach einem der vorstehenden Ansprüche, wobei die Seitenteile (14) der Flüssigkeitskammer (12) eine im Wesentlichen zylinderförmige Wand (14) aufweist.

6. Optisches Element nach einem der vorstehenden Ansprüche, wobei die Anordnung (24) zum Liefern eines Magnetfeldes über wenigstens einen Teil der Flüssigkeitskammer eine Spannungsquelle (24) zum Erzeugen eines ansteigenden Magnetfeldes aufweist.

7. Optisches Element nach Anspruch 6, wobei die Spannungsquelle (24) eine oder mehrere Spulen (26) um die Flüssigkeitskammer (12) herum umfasst.

8. Optisches Element nach einem der vorstehenden Ansprüche, wobei die erste Flüssigkeit (20) transparent und die zweite Flüssigkeit (22) nicht transparent ist.

9. Optisches Element nach einem der Ansprüche 1 bis 7, wobei die erste Flüssigkeit (20) transparent und die zweite Flüssigkeit (22) teilweise transparent ist.

10. Bildaufnahmeanordnung mit einem optischen Element nach einem der Ansprüche 1 bis 9.

11. Optische Aufzeichnungsanordnung mit einem optischen Element nach einem der Ansprüche 1 bis 9.

## Revendications

1. Elément optique comprenant une chambre à fluide (12), la chambre à fluide (12) ayant des parties latérales (14) et des parties d'extrémité (16, 18) et contenant un premier fluide (20) et un deuxième fluide (22), les fluides (20, 22) étant non miscibles et le deuxième fluide (22) étant capable d'être influencé par un champ magnétique, et un dispositif (24) pour fournir un champ magnétique sur au moins une partie de la chambre à fluide (12), les parties d'extrémité (16, 18) de la chambre à fluide (12) étant reliées l'une à l'autre seulement par les parties latérales (14), **caractérisé en ce qu'**une partie d'extrémité (18) de la chambre à fluide (12) est imperméable au premier fluide (20) ou **en ce qu'**une partie d'extrémité (18) de la chambre à fluide (12) est pourvue d'une couche de revêtement qui est imperméable au premier fluide (20).

2. Elément optique selon la revendication 1, dans lequel les parties d'extrémité (16, 18) de la chambre à fluide (12) sont sensiblement plates.

3. Elément optique selon la revendication 1 ou selon la revendication 2, dans lequel le deuxième fluide (22) est en contact avec une première partie d'extrémité de la chambre à fluide (12) et dans lequel le champ magnétique est capable de déplacer le deuxième fluide (22), de sorte que le premier fluide (20) entre en contact avec la première partie d'extrémité (18).

4. Elément optique selon l'une quelconque des revendications précédentes 1 à 3, dans lequel le deuxième fluide (22) est un fluide ferrique (22).

5. Elément optique selon l'une quelconque des revendications précédentes 1 à 4, dans lequel les parties latérales (14) de la chambre à fluide (12) comprennent une paroi sensiblement cylindrique (14).

6. Elément optique selon l'une quelconque des revendications précédentes 1 à 5, dans lequel le dispositif (24) pour fournir un champ magnétique sur au moins une partie de la chambre à fluide comprend une source de tension (24) afin de générer un champ magnétique à gradient.

7. Elément optique selon la revendication 6, dans lequel la source de tension (24) comprend une ou plusieurs bobines (26) autour de la chambre à fluide (12).

8. Elément optique selon l'une quelconque des revendications précédentes 1 à 7, dans lequel le premier fluide (20) est transparent et dans lequel le deuxième fluide (22) n'est pas transparent.

9. Elément optique selon l'une quelconque des revendications précédentes 1 à 7, dans lequel le premier fluide (20) est transparent et dans lequel le deuxième fluide (22) est partiellement transparent.

10. Dispositif de capture d'image incorporant un élément optique selon l'une quelconque des revendications précédentes 1 à 9.

11. Dispositif d'enregistrement optique incorporant un élément optique selon l'une quelconque des revendications précédentes 1 à 9.
